# EUROPEAN PATENT APPLICATION

(11) **EP 3 306 268 A1**
(43) Date of publication of application: **11.04.2018**
(21) Application number: 17194508.2
(22) Date of filing: 03.10.2017
(51) Int. Cl.: G01C 19/5733

(54) **INERTIAL SENSOR WITH MOTION LIMIT STRUCTURE**

(30) Priority: 05.10.2016 US 201615286348
(71) Applicant: NXP USA, Inc., Austin TX 78735 (US)
(72) Inventor: GEISBERGER, Aaron A., 5656 AG Eindhoven (NL)
(74) Representative: Pomper, Till

(57) **Abstract**

An inertial sensor includes a substrate, a movable mass, and a motion limit structure. The motion limit structure includes a rigid element interposed between first and second spring beams. The first spring beam has a first end fixed with the substrate and a second end coupled with the rigid element. The second spring beam is located between a pair of beams extending from an edge of the movable mass and is separated from each of the beams by a gap. The second spring beam has a third beam end coupled with the movable mass and a fourth beam end coupled with the rigid element. When the movable mass is stimulated to move beyond a predetermined limit, the rigid beam pivots as the spring beams flex. The second spring beam flexes to close the gap and contact one of the pair of beams to limit motion of the movable mass.

## Description

### TECHNICAL FIELD OF THE INVENTION

The present invention relates generally to microelectromechanical systems (MEMS) inertial sensors. More specifically, the present invention relates to a motion limit structure for restricting undesired motion of the movable parts of an inertial sensor resulting from external forces.

### BACKGROUND OF THE INVENTION

A common application of microelectromechanical systems (MEMS) devices is in the design and manufacture of inertial sensors, such as gyroscopes and accelerometers. Typically, MEMS gyroscope designs utilize vibrating elements to sense angular rate through the detection of a Coriolis acceleration. The vibrating elements are put into oscillatory motion along a first axis (typically referred to as a drive axis) to achieve a desired velocity. Once the vibrating elements are put in motion, the gyroscope is capable of detecting angular rate induced by the gyroscope being rotated about a second axis (typically referred to as an input axis) that is perpendicular to the first axis. Coriolis acceleration occurs along a third axis (typically referred to as a sense axis) that is perpendicular to each of the first and second axes. The amplitude of the oscillatory motion relative to the sense axis is proportional to the angular rate.

Accordingly, a MEMS gyroscope is in a constant state of motion during operation. Occasionally, external forces may be applied to the gyroscope which can cause the vibrating elements to extend beyond their normal operational range. These external forces can cause the vibrating elements to contact other components within the gyroscope resulting in adverse performance of the MEMS gyroscope and/or damage to the gyroscope components.

### BRIEF DESCRIPTION OF THE DRAWINGS

The accompanying figures in which like reference numerals refer to identical or functionally similar elements throughout the separate views, the figures are not necessarily drawn to scale, and which together with the detailed description below are incorporated in and form part of the specification, serve to further illustrate various embodiments and to explain various principles and advantages all in accordance with the present invention.
FIG. 1 shows a simplified top view of a microelectromechanical systems (MEMS) inertial sensor in accordance with an embodiment;
FIG. 2 shows an enlarged top view of a motion limit structure incorporated in the MEMS inertial sensor of FIG. 1;
FIG. 3 shows an enlarged top view of the motion limit structure of FIG. 3 responding to a rightward external force exerted on a vibrating mass of the MEMS inertial sensor;
FIG. 4 shows an enlarged top view of the motion limit structure of FIG. 3 responding to a leftward external force exerted on the vibrating mass of the MEMS inertial sensor;
FIG. 5 shows a simplified top view of a MEMS inertial sensor in accordance with another embodiment;
FIG. 6 shows an enlarged top view of a motion limit structure incorporated in the MEMS inertial sensor of FIG. 5;
FIG. 7 shows an enlarged top view of the motion limit structure of FIG. 6 pivoting in response to an external force exerted on a pair of vibrating movable masses of the MEMS inertial sensor of FIG. 5; and
FIG. 8 shows an enlarged top view of the motion limit structure of FIG. 6 pivoting in response to an external force exerted on the pair of vibrating movable masses of the MEMS inertial sensor of FIG. 5.

### DETAILED DESCRIPTION

In overview, the present disclosure concerns microelectromechanical systems (MEMS) inertial sensors having one or more motion limit structures. The motion limit structures are designed to undergo a geometric restriction when the travel of a MEMS movable mass exceeds a desired level. By undergoing a geometric restriction, the impact forces within a motion limit structure are effectively minimized. More particularly, the motion limit structure does not make contact with a second immobile stop structure which might otherwise disrupt the phase of the drive motion and result in instability. Accordingly, implementation of one or more motion limit structures in a MEMS inertial sensor, in lieu of secondary immobile stop structures, may result in enhanced performance and a more robust design of a MEMS inertial sensor.

The instant disclosure is provided to further explain in an enabling fashion the best modes, at the time of the application, of making and using various embodiments in accordance with the present invention. The disclosure is further offered to enhance an understanding and appreciation for the inventive principles and advantages thereof, rather than to limit in any manner the invention. The invention is defined solely by the appended claims including any amendments made during the pendency of this application and all equivalents of those claims as issued.

It is further understood that the use of relational terms, if any, such as first and second, top and bottom, and the like are used solely to distinguish one from another entity or action without necessarily requiring or implying any actual such relationship or order between such entities or actions. Furthermore, some of the figures may be illustrated using various shading and/or hatching to distinguish the different elements produced within the various structural layers. These different elements within the structural layers may be produced utilizing current and upcoming microfabrication techniques of depositing, patterning, etching, and so forth. Accordingly, although different shading and/or hatching is utilized in the illustrations, the different elements within the structural layers may be formed out of the same material.

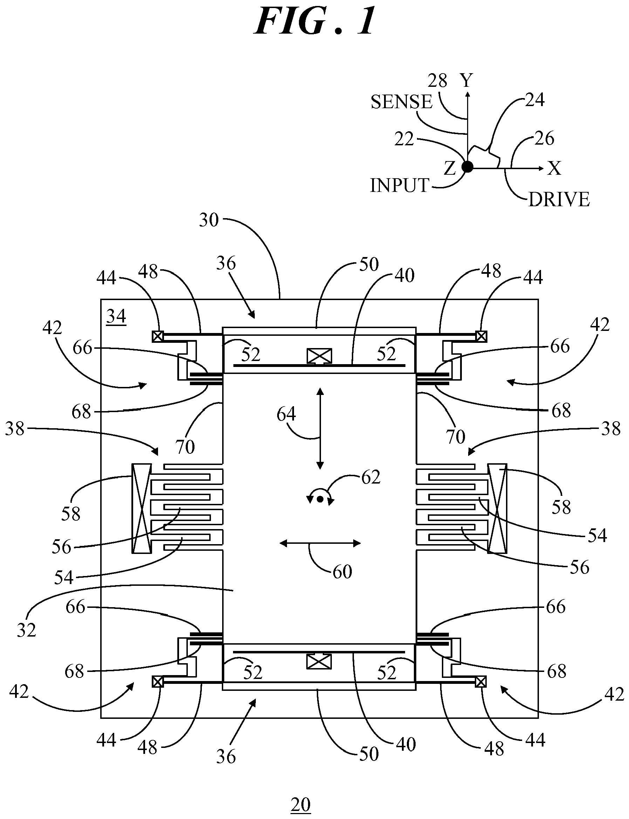

Referring to FIG. 1, FIG. 1 shows a simplified top view of a microelectromechanical systems (MEMS) inertial sensor 20 in accordance with an embodiment. MEMS inertial sensor 20 is generally configured to sense angular rate about an axis of rotation, i.e., the Z-axis in a three-dimensional coordinate system, referred to herein as input axis 22. Accordingly, MEMS inertial sensor 20 is referred to herein as a gyroscope 20. By conventional, gyroscope 20 is illustrated as having a generally planar structure within an X-Y plane 24, where an X-axis 26 extends rightwardly and leftwardly in FIG. 1 and a Y-axis 28 extends upwardly and downwardly in FIG. 1.

Gyroscope 20 generally includes a planar substrate 30, a movable mass 32 resiliently suspended above a surface 34 of substrate 30 via suspension structures 36, a drive system 38, and sense electrodes 40. In accordance with an embodiment, gyroscope further includes motion limit structures 42 positioned proximate movable mass 32 and spaced apart from surface 34 of substrate 30.

In this example, each of suspension structures 36 includes anchor elements 44 coupled to substrate 30, that are interconnected by flexible links 48 and a stiff beam member 50. Opposing ends of stiff beam member 50 are further coupled to outer edges of movable mass 32 via another set of flexible links 52. Anchor elements 44, flexible links 48, stiff beam member 50, and flexible links 52 retain movable mass 32 suspended above surface 34 of substrate 30. For consistency throughout the description of the following figures, any anchoring structures, such as anchor elements 44 that connect an element of gyroscope 20 to the underlying surface 34 of substrate 30 are illustrated with an "X" extending through the structure. Conversely, any structures that are not anchoring structures do not include this "X" and can therefore be suspended above surface 34 of substrate 30.

Drive system 38 is laterally displaced away from movable mass 32 and operably communicates with movable mass 32. In an example, each drive system 38 includes sets of drive elements configured to oscillate movable mass 32. The drive elements include pairs of electrodes, sometimes referred to as fixed electrodes 54 and movable electrodes 56. Movable electrodes 56 are positioned in alternating arrangement with fixed electrodes 54. In the illustrated example, fixed electrodes 54 are fixed to surface 34 of substrate 30 via an anchor 58. Movable electrodes 56 are suspended above surface 34 of substrate 30 and extend from an edge of movable mass 32. Thus, movable electrodes 56 are movable together with movable mass 32, and fixed electrodes 54 are stationary relative to movable electrodes 56 due to their fixed attachment to substrate 30. Only a few fixed and movable electrodes 54, 56 are shown for clarity of illustration. Those skilled in the art should readily recognize that the quantity and structure of the comb fingers will vary in accordance with design requirements.

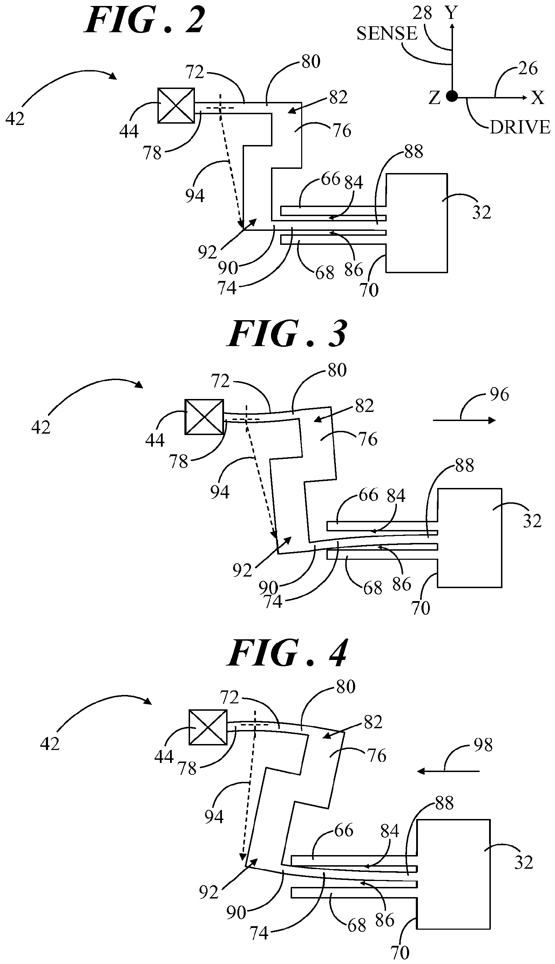

Movable mass 32 is configured to undergo oscillatory motion within X-Y plane 24. In general, an alternating current (AC) voltage may be applied to fixed electrodes 54 via a drive circuit (not shown) to cause movable mass 32 to linearly oscillate in a direction of motion substantially parallel to X-axis 26. As such, X-axis 26 is alternatively referred to herein as drive axis 26. The linearly oscillating motion of movable mass 32 is represented by a bi-directional arrow 60 in FIG. 2, and is referred to herein as drive motion 60. Once movable mass 32 is put in motion (i.e., drive motion 60 linearly oscillating parallel to drive axis 26), gyroscope 20 can detect angular rate induced by gyroscope 20 being rotated about the Z-axis, referred to as input axis 22. The rotation of gyroscope 20 about input axis 22 is represented by a dot partially encircled by a bi-directional curved arrow 62 in FIG. 2, and is referred to herein as angular stimulus 62. Coriolis acceleration occurs substantially parallel to Y-axis 28 and is sensed as a capacitance change between sense electrodes 40 and movable mass 32. As such, Y-axis 28 is alternatively referred to herein as sense axis 28. The linearly oscillating motion of movable mass 32 in response to Coriolis acceleration is represented by a bi-directional arrow 64 in FIG. 2, and is referred to herein as sense motion 64.

In prior art designs, external forces can cause the vibrating elements, e.g., movable mass(es), to contact other components within the gyroscope resulting in adverse performance of the MEMS gyroscope and/or damage to the gyroscope components. In accordance with a particular embodiment, motion limit structures 42 are designed into movable mass 32 through the use of a rotating flexure. This rotating flexure configuration causes movable mass 32 to undergo a geometric restriction when the travel of movable mass 32 exceeds a desired level so that impact forces are minimized relative to prior art travel stop structures. Motion limit structures 42 will be discussed in significantly greater detail in connection with FIGs. 2-4.

Now referring to FIGs. 1 and 2, FIG. 2 shows an enlarged top view of one of motion limit structures 42 incorporated in gyroscope 20. Only one motion limit structure 42 is discussed in connection with FIG. 2 for simplicity of illustration. It should be understood, however, that the following discussion applies equally to each of motion limit structures 42 incorporated in gyroscope 20.

As shown in FIGs. 1 and 2, movable mass 32 includes pairs of motion limit beams 66, 68 extending from an edge 70 of movable mass 32. One of motion limit structures 42 is associated with each pair of motion limit beams 66, 68. With particular regard to the enlarged illustration of FIG. 2, motion limit structure 42 includes a first spring beam 72, a second spring beam 74, and a rigid element 76 interposed between first and second spring beams 72, 74. First spring beam 72 has a first beam end 78 and a second beam end 80. First beam end 78 is in fixed relation with substrate 30 via its attachment to anchor element 44. Second beam end 80 is coupled with a first section, referred to herein as a first end 82, of rigid element 76. Second spring beam 74 is located between the pair of motion limit beams 66, 68 extending from edge 70 of movable mass 32. Further, second spring beam 74 is separated from motion limiting beams 66, 68 by gaps 84, 86. Second spring beam 74 has a third beam end 88 coupled with edge 70 of movable mass 32 and a fourth beam end 90 coupled with a second section, referred to herein as a second end 92, of rigid element 76.

In a neutral position (shown in FIG. 2), first and second spring beams 72, 74 are oriented substantially parallel to a direction of travel of movable mass 32. Thus, first and second spring beams 72, 74 are generally parallel to drive axis 26. However, rigid element 76 is oriented perpendicular to the direction of travel of movable mass 32. Thus, rigid element 76 is generally perpendicular to drive axis 26 and parallel to sense axis 28.

First and second spring beams 72, 74 are flexible relative to rigid element 76. As such, rigid element 76 is configured to pivot as first and second spring beams 72, 74 flex in response to movement of movable mass 32 relative to substrate 30. A geometric pivot radius 94 is represented by a dashed line overlying rigid element 76. Geometric pivot radius 94 represents the pivoting motion of rigid element 76 in response to movement of movable mass 32 relative to substrate 30. If gyroscope 20 is subjected to an excessive external force, e.g., shock, rigid element 76 pivots and first and second spring beams 72, 74 flex until second spring beam 74 makes contact with one of motion limit beams 66, 68. The contact with one of motion limit beams will limit the range of motion of movable mass 32 without including an impact or abrupt contact with a separate immobile element, such as a travel stop anchored to the substrate. Thus, the phase of drive motion 60 will largely remain undisrupted and, hence, stable.

FIG. 3 shows an enlarged top view of motion limit structure 42 responding to a rightward external force 96 exerted on the vibrating movable mass 32 of MEMS inertial sensor 20 (FIG. 1). In this example, when rightward external force 96 is sufficiently large, movable mass 32 will move rightward. Consequently, second end 92 of rigid element 76 pivots (counterclockwise in this example) and first and second spring beams 72, 74 flex in response to the rightward motion of movable mass 32. Sufficiently large rightward external force 96 will cause the movable second end 92 of rigid element 76 to extend rightward and gap 86 will close as second spring beam 74 contacts motion limit beam 68. This geometric stop resulting from the closure of gap 86 will increase the stiffness of second spring beam 74 and thereby limit the range of motion of movable mass 32. Thus, the length of rigid element 76 together with the displacement of movable mass 32 must be such that the radius of curvature and angle of displacement result in a motion perpendicular to the travel direction that is sufficient to close gap 86 and further increase the total stiffness of the structure.

FIG. 4 shows an enlarged top view of motion limit structure 42 responding to a leftward external force 98 exerted on the vibrating movable mass 32 of MEMS inertial sensor (FIG. 1). In this example, when leftward external force 98 is sufficiently large, movable mass 32 will move leftward. Consequently, second end 92 of rigid element 76 pivots (clockwise in this example) and first and second spring beams 72, 74 flex in response to the leftward motion of movable mass 32. Sufficiently large leftward external force 98 will cause the movable second end 92 of rigid element 76 to extend leftward and gap 84 will close as second spring beam 74 contacts motion limit beam 66. This geometric stop resulting from the closure of gap 84 will again increase the stiffness of second spring beam 74 and thereby limit the range of motion of movable mass 32.

A single movable mass inertial sensor such as gyroscope 20 having movable mass 32, drive system 38, and suspension structures 36 is provided for illustrative purposes. Particular to this design is the incorporation of motion limit structures 42 (in lieu of secondary immobile stop structures) that provide motion limiting capability while largely minimizing impact forces that might otherwise disrupt the phase of the drive motion. It should be understood, however, that motion limit structures 42 can be readily adapted for use with a wide variety of single movable mass inertial sensor configurations. Further, although motion limit structures 42 are described herein as being utilized in lieu of secondary immobile stop structures, in alternative embodiments, motion limit structures 42 may be included in addition to immobile stop structures.

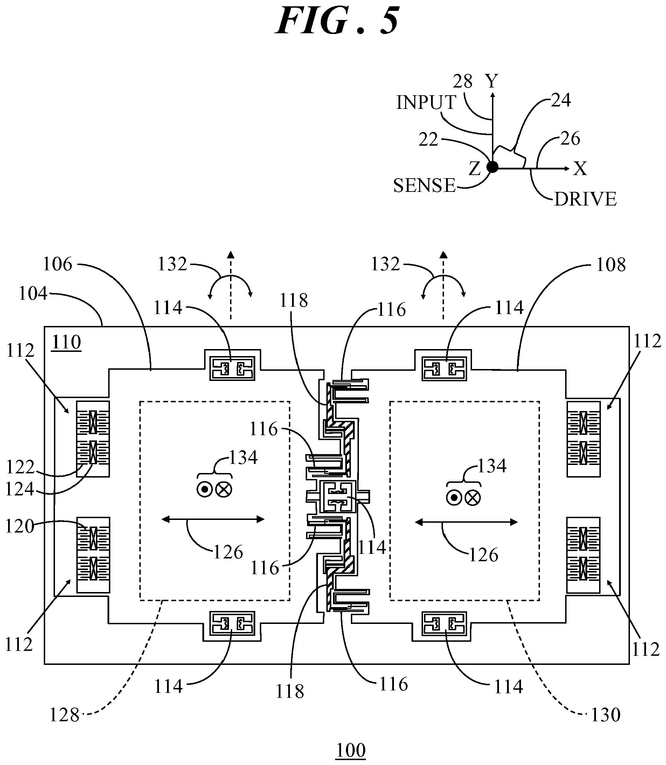

FIG. 5 shows a simplified top view of a MEMS inertial sensor 100 in accordance with another embodiment. MEMS inertial sensor 100 is generally configured to sense angular rate about an axis of rotation, i.e., Y-axis 28 in a three-dimensional coordinate system. Accordingly, Y-axis 28 is referred to in connection with MEMS inertial sensor 100 as an input axis 28. Thus, MEMS inertial sensor 100 is referred to herein as a gyroscope 100.

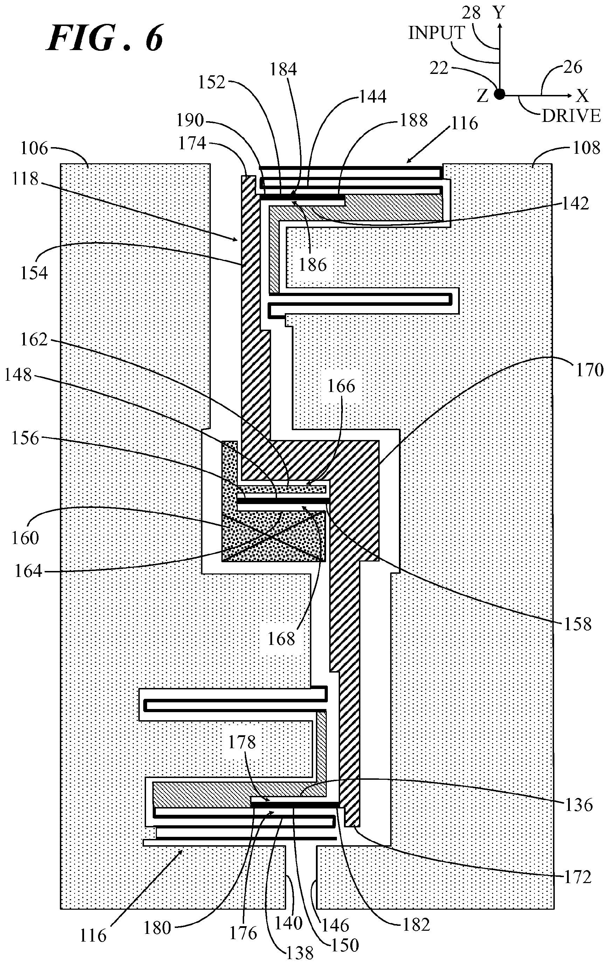

Gyroscope 100 generally includes a planar substrate 104, first and second movable masses 106, 108 resiliently suspended above a surface 110 of substrate 104, a drive system 112, suspension structures 114, a common mode rejection flexure system 116, and motion limit structures 118. More particularly, first and second movable masses 106, 108 reside adjacent to one another and are suspended above surface 110 of substrate 104 via suspension structures 114. In this example, common mode rejection flexure system 116 and motion limit structures 118 are located between first and second movable masses 106, 108, with motion limit structures 118 being incorporated with common mode rejection flexure systems 116. The structure of common mode rejection flexure system 116 and motion limit structures 118 will be discussed in significantly greater detail below in connection with FIGs. 6-8.

Drive system 112 is laterally displaced away from first and second movable masses 106, 108 and operably communicates with each of first and second movable masses 106, 108. More specifically, drive system 112 includes sets of drive elements configured to oscillate first and second movable masses 106, 108. The drive elements include pairs of fixed electrodes 120 and movable electrodes 122 that are positioned in alternating arrangement relative to one another. Like gyroscope 20 (FIG. 1), fixed electrodes 120 are fixed to surface 110 of substrate 104 via anchors 124. Movable electrodes 122 are suspended above surface 110 of substrate 104 and extend from edges of each of first and second movable mass 106, 108. Thus, movable electrodes 122 are movable together with first and second movable mass 106, 108, and fixed electrodes 120 are stationary relative to movable electrodes 122 due to their fixed attachment to substrate 104. Only a few fixed and movable electrodes 120, 122 are shown for clarity of illustration. Those skilled in the art should readily recognize that the quantity and structure of the fixed and movable electrodes will vary in accordance with design requirements.

First and second movable masses 106, 108 are configured to undergo oscillatory motion. In general, an alternating current (AC) voltage may be applied to fixed electrodes 120 via a drive circuit (not shown) to cause first and second movable masses 106, 108 to linearly oscillate in a direction of motion within X-Y plane 24 that is substantially parallel to X-axis 26. As such, X-axis 26 is again referred to herein as drive axis 26. The linearly oscillating motion of first and second movable masses 106, 108 is represented by a bi-directional arrows 126 in FIG. 5, and is referred to herein as drive motion 126. The linkage of first and second movable masses 106, 108 via common mode rejection flexure system 116 and motion limit structures 118 enables drive motion 126 of first and second movable masses 106, 108 in opposite directions, i.e., phase opposition, along drive axis 26. The particular structure of common mode rejection flexure system 116 can result in the rejection of in-phase (common mode) motion.

Suspension structures 114 effectively enable first and second movable masses 106, 108 to move in opposite directions, i.e., phase opposition, in response to sense motion of first and second movable masses 106, 108. In particular, the sense motion of first and second movable masses 106, 108 is a parallel plate sense motion aligned with an axis, i.e., Z-axis 22, perpendicular to surface 110 of substrate 104. Thus, in the embodiment of FIG. 5, Z-axis 22 is alternatively referred to herein as sense axis 22. Parallel plate sense motion refers to the movement of first and second movable masses 106, 108 in which their surface area remains generally parallel to surface 110 of substrate 105 as they oscillate along sense axis 22. Sense electrodes 128, 130 may be formed on surface 110 of substrate 104 underlying each of first and second movable masses 106, 108. Sense electrodes 128, 130 are obscured by first and second movable masses 106, 108 in the top view image of FIG. 5. Thus, sense electrodes 128, 130 are shown in dashed line form herein.

In general, while first and second movable masses 106, 108 are driven in phase opposition along drive axis 26, gyroscope 100 can detect angular rate induced by gyroscope 100 being rotated about Y-axis 28, referred to in connection with the embodiment of FIG. 5 as input axis 28. The rotation of gyroscope 100 about input axis 28 is represented by bi-directional curved arrows 132 about a dashed line projection of the Y-axis, and is referred to herein as input angular stimulus 132. First and second movable masses 106, 108 are configured to undergo parallel plate, out-of-plane motion along sense axis 22 in response to angular stimulus 132 on gyroscope 100. This out-of-plane sense motion of first and second movable masses 106, 108 is due to the Coriolis acceleration acting on first and second movable masses 106, 108. The out-of-plane sense motion 134 is represented in FIG. 5 by an encircled dot and an encircled "X" to demonstrate the motion of first and second movable masses 106, 108 into and out of the page upon which FIG. 5 is drawn. As first and second movable masses 106, 108 undergo the oscillatory, out-of-plane sense motion 134, the position change is sensed as changes in capacitance by sense electrodes 128, 130.

In a gyroscope design such as, for example, gyroscope 100, only drive and sense modes of vibration frequencies (i.e., drive frequency and sense frequency) are needed to fulfill the functionality of gyroscope 100. Any modes that exist besides the drive and sense modes are undesirable and are therefore referred to herein as parasitic modes of vibrations. The parasitic modes of vibration can potentially be harmful for proper device operation because all modes of vibration can be stimulated by external disturbances (e.g., shock and vibration) leading to a malfunction of a gyroscope. Therefore, parasitic modes can tend to impair the vibration robustness of a gyroscope design. The parasitic modes of vibration can be classified regarding their severity into "common modes" and "other parasitic modes." Common modes are based on common-phase motions of structural features. Common modes are critical because they can be easily stimulated by external disturbances like shock or vibration. Other parasitic modes are based on rotatory or anti-phase motions that are more difficult to stimulate by these external disturbances. Further, external disturbances like shock or vibration on prior art dual movable mass designs, can cause the vibrating elements, e.g., movable mass(es), to contact other components within the gyroscope resulting in adverse performance of the MEMS gyroscope and/or damage to the gyroscope components.

In accordance with the embodiment shown in FIG. 5, the configuration of common mode rejection flexure system 116 may serve to reduce the number of parasitic modes in the frequency range of the drive and sense frequencies and/or increase the vibration frequencies of the parasitic modes. A reduced number of parasitic modes in a particular frequency range can reduce the potential for an external disturbance to stimulate first and second movable masses 106, 108 which results in an increased robustness of gyroscope 100 to shock and vibration. Nevertheless, in the instance of a sufficiently large magnitude external shock, the incorporated motion limit structures 118 result in a rotating flexure configuration that causes first and second movable masses 106, 108 to undergo a geometric restriction when the travel of first and second movable masses 106, 108 exceeds a desired level so that impact forces are minimized relative to prior art immobile travel stop structures.

Referring now to FIGs. 5-6, FIG. 6 shows an enlarged top view of one of motion limit structures 118 incorporated with common mode rejection flexure system 116 of gyroscope 100. Only one motion limit structure 118 is discussed in connection with FIG. 6 for simplicity of illustration. It should be understood, however, that the following discussion applies equivalently to each of motion limit structures 118 incorporated in gyroscope 100.

As most visibly shown in FIG. 6, first movable mass 106 includes a pair of motion limit beams 136, 138 extending from an edge 140 of first movable mass 106 via common mode rejection flexure system 116. In this configuration, motion limit beams 136, 138 are formed from a portion of common mode rejection flexure system 116. For example, motion limit beam 138 also serves as one of the flexures of the common mode rejection flexure system 116. Similarly, second movable mass 108 includes a pair of motion limit beams 142, 144 extending from an edge 146 of second movable mass 108 via common mode rejection flexure system 116. Again, motion limit beams 142, 144 are formed from a portion of common mode rejection flexure system 116. For example, motion limit beam 144 also serves as one of the flexures of the common mode rejection flexure system 116.

Motion limit structure 118 includes a first spring beam 148, a second spring beam 150, a third spring beam 152, and a rigid element 154. First spring beam 148 has a first beam end 156 and a second beam end 158. First beam end 156 is in fixed relation with substrate 104 (FIG. 5) via its attachment to an anchor element 160. It should be observed that anchor element 160 includes a pair of extension structures 162, 164 with first spring beam 148 being located between the pair of extension structures 162, 164. Further, first spring beam 148 is separated from extension structures 162, 164 by gaps 166, 168. Second beam end 158 is coupled with an intermediate section 170 of rigid element 154 interposed approximately midway between a first end 172 and a second end 174 of rigid element 154.

Second spring beam 150 is located between the pair of motion limit beams 136, 138 extending from edge 140 of first movable mass 106. Further, second spring beam 150 is separated from motion limit beams 136, 138 by gaps 176, 178. Second spring beam 150 has a third beam end 180 coupled with edge 140 of first movable mass 106 via flexure system 116 and a fourth beam end 182 coupled with first end 172 of rigid element 154. Similarly, third spring beam 152 is located between the pair of motion limit beams 142, 144 extending from edge 146 of second movable mass 108. Further, third spring beam 152 is separated from motion limit beams 142, 144 by gaps 184, 186. Third spring beam 152 has a fifth beam end 188 coupled with edge 146 of second movable mass 108 via flexure system 116 and a sixth beam end 190 coupled with second end 174 of rigid element 154.

In a neutral position (shown in FIG. 6), first, second, and third spring beams 148, 150, 152 are oriented substantially parallel to a direction of travel of first and second movable masses 106, 108. Thus, first, second, and third spring beams 148, 150, 152 are generally parallel to drive axis 26. However, rigid element 154 is oriented perpendicular to the direction of travel of first and second movable masses 106, 108. Thus, rigid element 154 is generally perpendicular to drive axis 26 and parallel to input axis 28.

First, second, and third spring beams 148, 150, 152 are flexible relative to rigid element 154. As such, rigid element 154 is configured to pivot as first, second, and third spring beams 148, 150, 152 flex in response to movement of first and second movable masses 106, 108 relative to substrate 104 (FIG. 5). If gyroscope 100 is subjected to an excessive external force, e.g., shock, rigid element 154 pivots and first, second, and third spring beams 148, 150, 152 flex until one or more of second and third spring beams 150, 152 makes contact with its respective pair of motion limit beams 136, 138 or 142, 144. Coincidently, first spring beam 148 may also make contact with its pair of extension structures 162, 164. These contacts will limit the range of motion of first and second movable masses 106, 108 without including an impact or abrupt contact with a separate immobile element, such as a travel stop anchored to the substrate. Thus, the phase of drive motion 126 will largely remain undisrupted and, hence, stable.

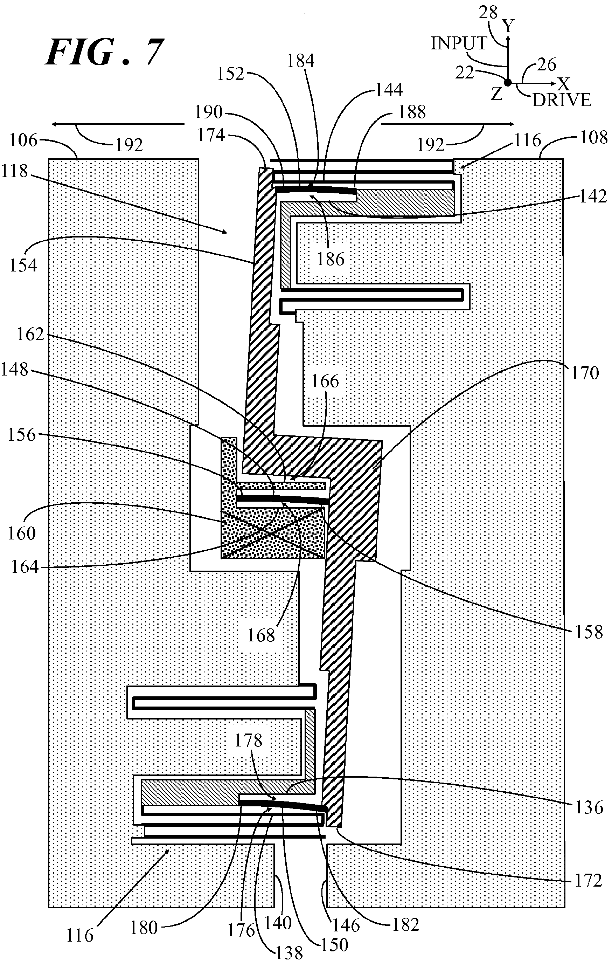

FIG. 7 shows an enlarged top view of motion limit structure 118 pivoting in response to an external force exerted on the pair of vibrating movable masses of MEMS inertial sensor 100 (FIG. 5). In this example, when first and second movable masses 106, 108 are outwardly extended (i.e., have moved away from one another) as denoted by outwardly directed arrows 192, rigid element 154 pivots generally clockwise about a pivot axis that is approximately centered at first spring beam 148, and first, second, and third spring beams 148, 150, 152 flex in response to the outward extension of first and second movable masses 106, 108. Sufficiently large motion will cause first end 172 of rigid element 154 to move leftward and gap 176 will close as second spring beam 150 contacts motion limit beam 138. Similarly, second end 174 of rigid element 154 will move rightward and gap 184 will close as third spring beam 152 contact motion limit beam 144. Additionally, first spring beam 148 may come into contact with one of extension structures 162, 164. The geometric stop resulting from the closure of gaps 176, 184 will increase the stiffness of second and third spring beams 150, 152 and thereby limit the range of motion of first and second movable masses 106, 108.

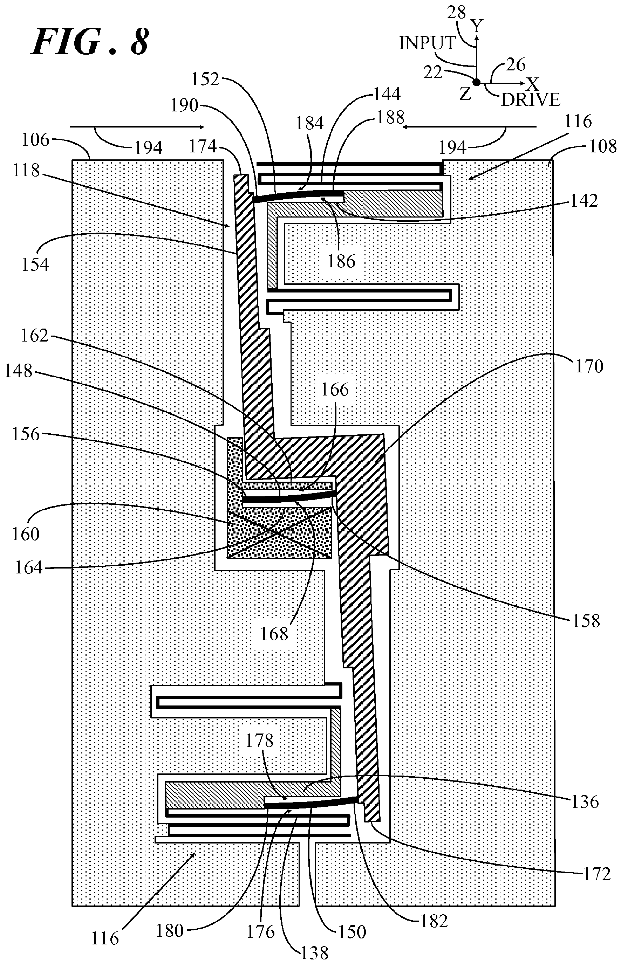

FIG. 8 shows an enlarged top view of the motion limit structure 118 pivoting in response to an external force exerted on the pair of vibrating movable masses of the MEMS inertial sensor 100 (FIG. 5). In this example, when first and second movable masses 106, 108 are inwardly extended (i.e., have moved toward one another) as denoted by inwardly directed arrows, rigid element 154 pivots generally counterclockwise about a pivot axis that is approximately centered at first spring beam 148, and first, second, and third spring beams 148, 150, 152 flex in response to the inward extension of first and second movable masses 106, 108. Sufficiently large motion will cause first end 172 of rigid element 154 to move rightward and gap 178 will close as second spring beam 150 contacts motion limit beam 136. Similarly, second end 174 of rigid element 154 will move leftward and gap 186 will close as third spring beam 152 contact motion limit beam 142. Additionally, first spring beam 148 may come into contact with one of extension structures 162, 164. The geometric stop resulting from the closure of gaps 178, 186 will increase the stiffness of second and third spring beams 150, 152 and thereby limit the range of motion of first and second movable masses 106, 108.

A dual movable mass inertial sensor such as gyroscope 100 having first and second movable masses 106, 108, drive system 112, and suspension structures 114 is provided for illustrative purposes. Particular to this design is the inclusion of common mode rejection flexures 116 for facilitating anti-phase motion of first and second movable masses 106, 108 as well as the incorporation of motion limit structures 118 (in lieu of for largely minimizing impact forces without disrupting the phase of the drive motion. It should be understood, however, that motion limit structures 118 can be readily adapted for use with a wide variety of dual movable mass inertial sensor configurations.

Thus, microelectromechanical systems (MEMS) inertial sensors having one or more motion limit structures are disclosed herein. An embodiment of an inertial sensor comprises a substrate, a movable mass spaced apart from the substrate, the movable mass including a pair of beams extending from an edge of the movable mass, and a motion limit structure spaced apart from the substrate. The motion limit structure includes a first spring beam, a second spring beam, and a rigid element interposed between the first and second spring beams. The first spring beam has a first beam end in fixed relation with the substrate and a second beam end coupled with a first section of the rigid element. The second spring beam is located between the pair of beams, and the second spring beam has a third beam end coupled with the movable mass and a fourth beam end coupled with a second section of the rigid element.

Another embodiment of an inertial sensor comprises a substrate, a movable mass spaced apart from the substrate, the movable mass including a pair of beams extending from an edge of the movable mass, and a motion limit structure spaced apart from the substrate. The motion limit structure includes a first spring beam, a second spring beam, and a rigid element interposed between the first and second spring beams. The first spring beam has a first beam end in fixed relation with the substrate and a second beam end coupled with a first section of the rigid element. The second spring beam is located between the pair of beams, and the second spring beam has a third beam end coupled with the movable mass and a fourth beam end coupled with a second section of the rigid element. The first and second spring beams are oriented substantially parallel to a direction of travel of the movable mass, and the rigid element is oriented substantially perpendicular to a direction of travel of the movable mass.

Another embodiment of an inertial sensor comprises a substrate, a movable mass spaced apart from the substrate, the movable mass including a pair of beams extending from an edge of the movable mass, and a motion limit structure spaced apart from the substrate. The motion limit structure includes a first spring beam, a second spring beam, and a rigid element interposed between the first and second spring beams. The first spring beam has a first beam end in fixed relation with the substrate and a second beam end coupled with a first section of the rigid element. The second spring beam is located between the pair of beams, and the second spring beam has a third beam end coupled with the movable mass and a fourth beam end coupled with a second section of the rigid element, wherein the first and second spring beams are oriented substantially parallel to a direction of travel of the movable mass, and the first and second spring beams are flexible relative to the rigid element.

The motion limit structures of the inertial sensor embodiments described herein are designed to undergo a geometric restriction when the travel of a MEMS movable mass exceeds a desired level. By undergoing a geometric restriction, the impact forces within a motion limit structure are effectively minimized. More particularly, the motion limit structure does not make contact with a second immobile stop structure which might otherwise disrupt the phase of the drive motion and result in instability. Accordingly, implementation of one or more motion limit structures in a MEMS inertial sensor (in lieu of secondary immobile stop structures) that provide motion limiting capability while largely minimizing impact forces that might otherwise disrupt the phase of the drive motion, may result in enhanced performance and a more robust design of a MEMS inertial sensor.

This disclosure is intended to explain how to fashion and use various embodiments in accordance with the invention rather than to limit the true, intended, and fair scope and spirit thereof. The foregoing description is not intended to be exhaustive or to limit the invention to the precise form disclosed. Modifications or variations are possible in light of the above teachings. The embodiment(s) was chosen and described to provide the best illustration of the principles of the invention and its practical application, and to enable one of ordinary skill in the art to utilize the invention in various embodiments and with various modifications as are suited to the particular use contemplated. All such modifications and variations are within the scope of the invention as determined by the appended claims, as may be amended during the pendency of this application for patent, and all equivalents thereof, when interpreted in accordance with the breadth to which they are fairly, legally, and equitably entitled.

## Claims

1. An inertial sensor comprising:
a substrate (30, 104, 105);
a movable mass (32, 106, 108) spaced apart from said substrate (30, 104, 105), said movable mass (32, 106, 108) including a pair of beams (66, 68, 136, 138, 142, 144) extending from an edge (70, 140, 146) of said movable mass (32, 106, 108); and
a motion limit structure (42, 118) spaced apart from said substrate (30, 104, 105), said motion limit structure (42, 118) including a first spring beam (72, 148), a second spring beam (74, 150), and a rigid element (76, 154) interposed between said first and second spring beams (72, 148; 74, 150), said first spring beam (72, 148) having a first beam end (78, 156) in fixed relation with said substrate (30, 104, 105) and having a second beam end (80, 158) coupled with a first section of said rigid element (76, 154), said second spring beam (74, 150) being located between said pair of beams (66, 68, 136, 138, 142, 144), and said second spring beam (74, 150) having a third beam end (88, 180) coupled with said movable mass (32, 106, 108) and a fourth beam end (90, 182) coupled with a second section of said rigid element (76, 154).

2. The inertial sensor of claim 1, wherein said first and second spring beams (72, 148; 74, 150) are oriented substantially parallel to a direction of travel (26, 60) of said movable mass (32, 106, 108).

3. The inertial sensor of claim 1 or claim 2, wherein said rigid element (76, 154) is oriented substantially perpendicular to a direction of travel (26, 60) of said movable mass (32, 106, 108).

4. The inertial sensor of any one of the claims 1 to 3, wherein said first and second spring beams (72, 148; 74, 150) are flexible relative to said rigid element (76, 154).

5. The inertial sensor of claim 4, wherein in response to movement of said movable mass (32, 106, 108) relative to said substrate (30, 104, 105), said rigid element (76, 154) is configured to pivot as said first and second spring beams (72, 148; 74, 150) flex.

6. The inertial sensor of any one of the claims 1 to 5, wherein said second spring beam (74, 150) is separated from each of said pair of beams (66, 68, 136, 138, 142, 144) by a gap.

7. The inertial sensor of claim 6, wherein when said movable mass (32, 106, 108) is stimulated to move beyond a predetermined limit, said second spring beam (74, 150) flexes to close said gap and contact one of said pair of beams (66, 68, 136, 138, 142, 144).

8. The inertial sensor of any one of the claims 1 to 7, wherein said inertial sensor further comprises an anchor element (44, 160) coupled to said substrate (30, 104, 105), and said first beam end (78, 156) of said first spring beam (72, 148) is coupled to said anchor element (44, 160).

9. The inertial sensor of claim 8, wherein said anchor element (44, 160) includes a pair of stiff extension structures (162, 164), wherein said first spring beam (72, 148) is located between said pair of stiff extension structures (162, 164).

10. The inertial sensor of claim 8 or claim 9, wherein said rigid element (76, 154) includes a first end (82, 172) and a second end (92, 174), and said first section of said rigid element (76, 154) is an intermediate section (170) of said rigid element (76, 154) approximately midway between said first and second ends (82, 172; 92, 174) such that said second beam end (80, 158) of said first spring beam (72, 148) is coupled at said intermediate section (170) between said first and second ends (82, 172; 92, 174).

11. The inertial sensor of claim 10, wherein said movable mass (32, 106, 108) is a first movable mass (106), said pair of beams (66, 68, 136, 138, 142, 144) is a first pair of beams (136, 138), and said inertial sensor further comprises:
a second movable mass (108) spaced apart from said substrate (30, 104, 105), said second movable mass (108) including a second pair of beams (142, 144) extending from a second edge (146) of said second movable mass (108); and
said motion limit structure (42, 118) further comprises a third spring beam (152) located between said second pair of beams (142, 144), said third spring beam (152) having a fifth beam end (188) coupled with said second movable mass (108) and a sixth beam end (190) coupled with said rigid element (76, 154) at said second end (174).

12. The inertial sensor of claim 11, wherein:
said first pair of beams (136, 138) is a first portion of a first spring system coupled to said first movable mass (106); and
said second pair of beams (142, 144) is a second portion of a second spring system coupled to said second movable mass (108).

13. The inertial sensor of any one of the claims 1 to 12, wherein said inertial sensor is a gyroscope (100).

14. The inertial sensor of any one of the claims 1 to 13, wherein said rigid element (76, 154) is configured to pivot in response to movement of said movable mass (32, 106, 108) relative to said substrate (30, 104, 105).

15. The inertial sensor of claim 14, wherein when said movable mass (32, 106, 108) is stimulated to move beyond a predetermined limit, said rigid element (76, 154) pivots and said second spring beam (74, 150) flexes to close said gap and contact one of said pair of beams (66, 68, 136, 138, 142, 144).
